# DEMANDE DE BREVET EUROPEEN

(11) **EP 1 772 579 A1**
(43) Date de publication de la demande: **11.04.2007**
(21) Numéro de dépôt: 06300947.6
(22) Date de dépôt: 13.09.2006
(51) Int. Cl.: E05D 15/06

(54) **Porte latérale coulissante équipée de moyens de guidage.**

(30) Priorité: 04.10.2005 FR 0510117
(71) Demandeur: Renault s.a.s., 92100 Boulogne Billancourt (FR)
(72) Inventeur: Chataigner, Aurélien, 92360 Meudon La Foret (FR); Moreau, Michel, 78200 Jouy Mauvoisin (FR); Lerooy, Jean François, 92420 Vaucresson (FR)

(57) **Abrégé**

L'invention concerne une porte latérale coulissante de véhicule automobile, comprenant un ouvrant (10) qui présente une paroi interne (24) et une paroi externe (26) formant un caisson, ledit ouvrant (10) étant relié audit véhicule par des moyens de liaisons mobiles (20), ledit ouvrant (10) comprenant deux rails de guidage (36, 38), et lesdits moyens de liaison mobiles étant terminés par deux extrémités opposées (44, 46) l'une de l'autre et formant galets, destinées à être engagées respectivement dans lesdits rails de guidage (36, 38) ; selon l'invention lesdits moyens de liaison mobiles (20) comprennent un seul bras (19, 21) terminé par lesdites extrémités (44, 46) ; et ledit ouvrant (10) présente une fente transversale (30) longitudinale pour permettre le passage dudit bras (19, 21), lesdits rails de guidage (36, 38) étant montés dans ledit caisson, de part et d'autre de ladite fente transversale (30).

## Description

La présente invention se rapporte à une porte latérale coulissante de véhicule automobile.

Des véhicules automobiles déjà connus, surtout les véhicules utilitaires, sont équipés de portes latérales coulissantes. Ces véhicules comprennent une caisse dans laquelle est pratiquée au moins une ouverture latérale, et cette ouverture latérale est susceptible d'être refermée par un ouvrant constituant la porte.

Cet ouvrant comporte une paroi interne et une paroi externe espacées l'une de l'autre d'une distance correspondant sensiblement à l'épaisseur de la porte et il est relié à la caisse par des moyens de liaison.

Généralement, la caisse est équipée de rails de guidage et l'ouvrant de moyens de roulement formant galets. Ainsi, les moyens de roulement respectivement engagés dans les rails de guidage qui se prolongent latéralement par rapport à l'ouverture, permettent de faire coulisser l'ouvrant pour l'écarter de l'ouverture et de pénétrer ainsi à l'intérieur de la caisse.

Un inconvénient de ce type de dispositif réside essentiellement dans la mise en oeuvre de rails de guidage plus ou moins apparents sur la caisse du véhicule.

Aussi, il a été imaginé de relier l'ouvrant à la caisse par deux bras de liaison mobiles et d'équiper non plus la caisse mais ledit ouvrant de deux rails de guidage sensiblement parallèles entre eux, un rail supérieur et un rail inférieur. Et lesdits bras de liaison mobiles étant alors terminés respectivement par des galets, les galets étant respectivement engagés dans lesdits rails de guidage, pour autoriser le coulissement dudit ouvrant par rapport auxdits bras de liaison mobiles lorsque lesdits bras de liaison sont situés dans une position écartée de la caisse. On pourra notamment se référer au document US 6 183 039 illustrant un tel dispositif.

Toutefois, ce dispositif est relativement encombrant et complexe à mettre en oeuvre sur l'ouvrant, et surtout ne permet plus d'ajuster sur la paroi interne de l'ouvrant les accessoires habituels tels accoudoirs, cendriers ou autres commandes.

Un problème qui se pose alors et que vise à résoudre la présente invention est de fournir une porte latérale coulissante, qui non seulement permette d'équiper l'ouvrant des accessoires habituels précités mais aussi, qui soit relativement esthétique.

Aussi, et dans le but de résoudre ce problème, l'invention propose une porte latérale coulissante de véhicule automobile, ledit véhicule automobile comprenant une caisse dans laquelle est pratiquée une ouverture, ladite porte latérale comprenant un ouvrant adapté à obturer ladite ouverture, ledit ouvrant présentant une paroi interne et une paroi externe espacées l'une de l'autre pour former un caisson, ledit ouvrant étant relié à ladite caisse par des moyens de liaison mobiles équipés d'au moins un moyen formant galets, ledit ouvrant comprenant au moins un rail de guidage, ledit au moins un moyen formant galets étant adapté à être engagé dans ledit rail de guidage pour autoriser le coulissement dudit ouvrant par rapport auxdits moyens de liaison mobiles ; selon l'invention, ledit rail de guidage est monté à l'intérieur dudit caisson ; et ledit ouvrant présente une fente transversale pratiquée longitudinalement dans ladite paroi interne pour permettre le passage desdits moyens de liaison mobiles.

Ainsi, une caractéristique de l'invention réside dans le montage du rail de guidage à l'intérieur de l'ouvrant qui est alors totalement camouflé et avec lequel vient coopérer ledit au moins un moyen formant galets. De la sorte, la paroi interne orientée vers l'intérieur du véhicule peut être équipée des accessoires habituels précités

Selon un mode de réalisation de l'invention particulièrement avantageux, lesdits moyens de liaison mobiles comprennent un seul bras terminé par ledit au moins un moyen formant galets. Ainsi, une autre caractéristique de l'invention réside dans la mise en oeuvre d'un seul bras adapté à traverser une seule fente transversale de la paroi interne pour rejoindre ensuite ledit au moins un rail de guidage, précisément logé à l'intérieur du caisson de l'ouvrant. En outre, le seul bras est bien moins encombrant que les deux bras de liaison équipant les portes coulissantes selon l'art antérieur.

Selon une première variante de réalisation de l'invention, ledit bras comporte des moyens télescopiques à l'extrémité desquels est monté ledit au moins un moyen formant galets de manière à pouvoir l'entraîner entre une position rapprochée de la caisse et une position écartée de ladite caisse. Selon une seconde variante de réalisation de l'invention, ledit bras latéral comprend une biellette montée à pivotement latéral sur ladite caisse.

Avantageusement, ledit ouvrant comprend deux rails de guidage sensiblement parallèles entre eux, un rail supérieur et un rail inférieur, tandis que lesdits moyens de liaison, mobiles latéralement entre une position rapprochée de la caisse et une position éloignée, présentent deux extrémités opposées l'une de l'autre selon une direction sensiblement verticale et perpendiculaire à la course des moyens de liaison mobiles, chacune desdites extrémités présentant un moyen formant galets, lesdits moyens formant galets étant destinés à être engagés respectivement dans lesdits rails de guidage.

Selon un mode de mise en oeuvre préféré de l'invention, lesdits rails de guidage sont montés de part et d'autre de ladite fente transversale afin de répartir les appuis et maintenir l'ouvrant en position fixe selon un plan sensiblement vertical. En outre, l'un desdits moyens formant galets présente, avantageusement, au moins deux organes de roulement espacés l'un de l'autre et engagés dans un même rail de guidage pour former au moins trois points d'appui et de manière à bloquer l'ouvrant en rotation par rapport aux moyens de liaison mobiles, et dans le plan sensiblement vertical précité, ainsi qu'on l'expliquera plus en détail dans la suite de la description.

Selon un mode de mise en oeuvre de l'invention particulièrement avantageux, lesdits rails de guidage s'étendent parallèlement dans ledit caisson en formant des courbes, soit selon un même plan ou selon des plans différents de manière à guider l'ouvrant en translation selon des trajectoires particulières, par exemple pour entraîner la porte coulissante vers le haut à mesure qu'elles se translate ou alors pour l'écarter de la caisse, ou encore pour l'entraîner à la fois vers le haut et l'écarter de la caisse.

De manière préférée, lesdits moyens de liaison mobiles présente une platine intermédiaire définissant un plan moyen et comportant deux portions opposées, ladite platine intermédiaire étant adaptée à être logée à l'intérieur dudit caisson de façon que son plan moyen soit sensiblement parallèle aux deux parois, interne et externe, lesdites portions opposées définissant lesdites extrémités opposées, ladite platine intermédiaire étant alors susceptible d'être entraînée en translation sensiblement parallèlement aux deux parois.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en coupe verticale et transversale d'une porte latérale coulissante d'un véhicule automobile conforme à l'invention ;
- la Figure 2 est une vue schématique de détail d'un élément représenté sur la Figure 1 ; et,
- la Figure 3 est une vue schématique de face dudit élément représenté sur la Figure 2, selon une variante de réalisation.

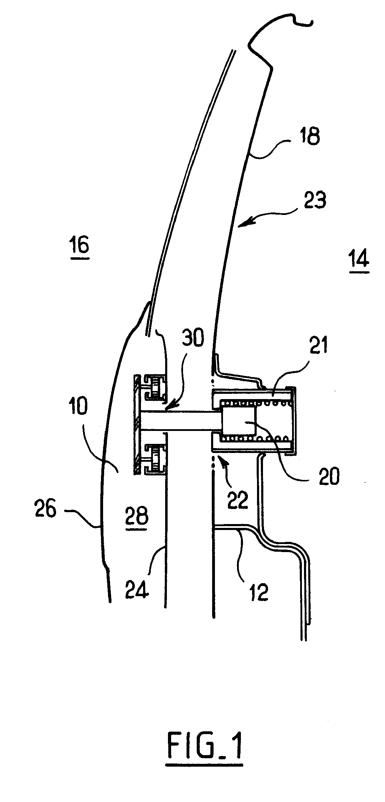

La Figure 1 montre en coupe verticale et transversale d'un véhicule automobile, un ouvrant 10 d'une porte coulissante, destinée à obturer une ouverture ménagée dans une caisse 12 du véhicule automobile. La caisse 12 isole un intérieur 14 du véhicule d'un extérieur 16. Elle comporte notamment un panneau latéral arrière 18 auquel est relié l'ouvrant 10 par l'intermédiaire de moyens de liaison mobiles constitués ici à titre d'exemple par un bras télescopique 20. Il sera compris que les moyens de liaisons mobiles peuvent, sans sortir du contexte de l'invention, être constitué par une biellette, montée articulée latéralement dans le panneau latéral arrière 18.

Le bras télescopique 20, montré ici, comporte notamment une tige 19, montée à coulissement dans un corps de cylindre 21 qui lui est solidaire du panneau latéral arrière 18. Par ailleurs, la tige 19 est montée bloquée en rotation dans le corps de cylindre 21 grâce à des moyens non représentés, par exemple une clavette ou une tige à section non circulaire.

Le panneau latéral arrière 18 présente une surface interne 23 tournée vers l'intérieur 14 et, près du bord de ladite ouverture, un orifice 22 que le bras télescopique 20 est adapté à traverser pour entraîner l'ouvrant 10 en translation vers une position écartée de la caisse 12.

L'ouvrant 10 présente une paroi interne 24 tournée vers l'intérieur 14 et une paroi externe 26 tournée vers l'extérieur 16, les parois étant espacées l'une de l'autre en formant un caisson dans lequel s'étend un espace libre 28. En outre, une fente transversale 30 est pratiquée longitudinalement dans la paroi interne 24 de l'ouvrant 10 pour permettre le passage de la tige 19.

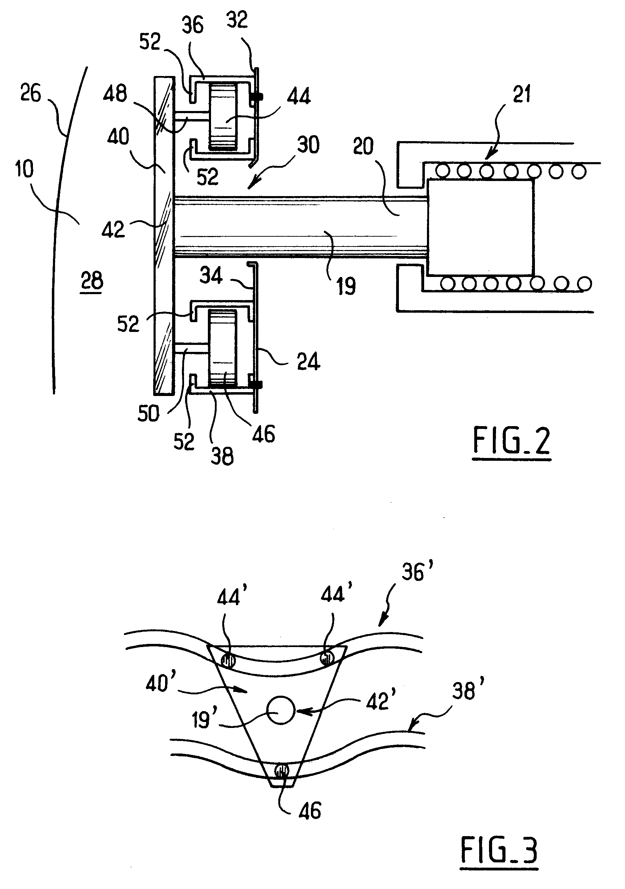

On va maintenant décrire plus en détail, et en référence à la Figure 2, le mode de liaison entre le bras télescopique 20 et l'ouvrant 10. On retrouve partiellement sur cette Figure la paroi interne 24 et sa fente transversale 30 qui définit alors deux bordures internes à l'intérieur de l'ouvrant 10, une bordure supérieure 32 et une bordure inférieure opposée 34. Ces bordures internes 32, 34 sont respectivement équipées d'un rail de guidage supérieur 36 et d'un rail de guidage inférieur 38, parallèles entre eux et qui s'étendent dans l'espace libre 28 en longeant la fente transversale 30. Ces rails de guidage 36, 38 présentent une forme en U ouverte vers la paroi externe 26 de manière à ménager respectivement deux bandes de roulement opposées sensiblement perpendiculaires à la paroi interne 24. En outre, le bras télescopique 20 comporte une platine intermédiaire 40, reliée perpendiculairement à la tige 19 et qui est logée à l'intérieur de l'ouvrant 10. La tige 19 est reliée sensiblement au centre 42 de la platine intermédiaire 40 qui elle s'étend alors dans l'espace libre 28, en regard respectivement des bordures 32, 34 et des rails de guidage 36, 38 de chaque côté de la fente transversale 30.

De plus, la platine intermédiaire 40 est équipée de galets supérieurs 44 dont un seul apparaît ici sur la Figure 2, et d'un galet inférieur 46 respectivement montés libres en rotation à l'extrémité d'arbres supérieurs 48 et d'un arbre inférieur 50, orientés en retour vers les rails de guidage supérieur 36 et inférieur 38 sensiblement parallèlement à la tige 19. Les galets supérieurs 44, au moins au nombre de deux, sont montés espacés l'un de l'autre. Aussi, les galets supérieurs 44 et inférieur 46 sont respectivement montés dans les rails de guidage supérieur 36 et inférieur 38, formant ainsi au moins trois points d'appui, pour autoriser la translation de la platine intermédiaire 40 à l'intérieur de l'espace libre 28, et ils y sont emprisonnés grâce à des ailes en retour 52 qui prolongent respectivement l'un vers l'autre, les bords libres des rails en U. De la sorte, lorsque le bras télescopique 20 est dans la position écartée de la caisse du véhicule ainsi que cela est le cas sur la Figure 2, l'ouvrant 10 est solidaire de la seule tige 19 qui est bloquée en rotation dans le corps de cylindre 21, et l'ouvrant 10 va pouvoir alors être entraîné en translation sensiblement perpendiculairement au bras télescopique 20 et parallèlement à la caisse 12 du véhicule pour être écarté de l'ouverture ou à l'inverse pour être porté en regard de l'ouverture, la tige 19 étant alors mobile par rapport à la fente 30 à travers laquelle elle s'étend.

On a illustré sur la Figure 3, de façon schématique et en vue de face, selon un mode particulier de mise en oeuvre de l'invention, une platine intermédiaire 40' triangulaire et deux rails de guidage incurvés 36' et 38' parallèles. La platine intermédiaire 40' présente un centre 42' auquel est reliée une tige 19'. En outre, la platine intermédiaire 40' présente deux galets supérieurs 44' espacés l'un de l'autre et engagés tous les deux dans le rail de guidage supérieur 36' et un galet inférieur 46' engagé dans le rail de guidage inférieur 38'. De la sorte, l'ouvrant 10 qui n'apparaît pas sur cette Figure, va pouvoir être entraîné en mouvement selon une course correspondant à la forme des rails de guidage 36', 38'. Ces rails de guidage incurvés 36', 38' ne sont pas nécessairement courbés dans un même plan, et peuvent l'être dans au moins deux plans différents. De la sorte, la course de l'ouvrant 10 n'est pas nécessairement rectiligne, et peut être parfaitement déterminée par la géométrie des rails de guidage incurvés.

Les modes de mise en oeuvre de l'invention précités, permettent avant tout de fournir des moyens de liaison mobiles, entre l'ouvrant et la caisse, qui soient peu encombrant, et dont une partie substantielle est logée dans l'espace libre 28 situé à l'intérieur de l'ouvrant et se trouve ainsi masquée.

## Revendications

1. Porte latérale coulissante de véhicule automobile, ledit véhicule automobile comprenant une caisse (12) dans laquelle est pratiquée une ouverture, ladite porte latérale comprenant un ouvrant (10) adapté à obturer ladite ouverture, ledit ouvrant (10) présentant une paroi interne (24) et une paroi externe (26) espacées l'une de l'autre pour former un caisson, ledit ouvrant (10) étant relié à ladite caisse (12) par des moyens de liaison mobiles (20) équipés d'au moins un moyen formant galets (44, 46), ledit ouvrant (10) comprenant au moins un rail de guidage (36, 38 ; 36', 38'), ledit au moins un moyen formant galets étant adapté à être engagé dans ledit rail de guidage pour autoriser le coulissement dudit ouvrant (10) par rapport auxdits moyens de liaison mobiles (20) ;
**caractérisée en ce que** ledit rail de guidage est monté à l'intérieur dudit caisson ;
et **en ce que** ledit ouvrant (10) présente une fente transversale (30) pratiquée longitudinalement dans ladite paroi interne (24) pour permettre le passage desdits moyens de liaison mobiles (20).

2. Porte latérale coulissante selon la revendication 1, **caractérisée en ce que** lesdits moyens de liaison mobiles (20) comprennent un seul bras (19, 21) terminé par ledit au moins un moyen formant galets (44, 46).

3. Porte latérale coulissante selon la revendication 2, **caractérisée en ce que** ledit bras (19, 21) comporte des moyens télescopiques.

4. Porte latérale coulissante selon la revendication 2, **caractérisée en ce que** ledit bras comprend une biellette montée à pivotement sur ladite caisse (12).

5. Porte latérale coulissante selon l'une quelconque des revendications 1 à 4, **caractérisée en ce que** ledit ouvrant (10) comprend deux rails de guidage (36, 38 ; 36', 38') sensiblement parallèles entre eux, un rail supérieur (36 ; 36') et un rail inférieur (38 ; 38'), tandis que lesdits moyens de liaison mobiles présentent deux extrémités opposées (44, 46) l'une de l'autre, chacune desdites extrémités présentant un moyen formant galets, lesdits moyens formant galets étant destinés à être engagés respectivement dans lesdits rails de guidage (36, 38 ; 36', 38').

6. Porte latérale coulissante selon la revendication 5, **caractérisée en ce que** lesdits rails de guidage (36, 38 ; 36', 38') sont montés de part et d'autre de ladite fente transversale (30).

7. Porte latérale coulissante selon la revendication 5 ou 6, **caractérisée en ce que** l'un desdits moyens formant galets présente au moins deux organes de roulement (44') espacés l'un de l'autre et engagés dans un même rail de guidage (36').

8. Porte latérale coulissante selon l'une quelconque des revendications 5 à 7, **caractérisée en ce que** lesdits rails de guidage (36', 38') s'étendent dans ledit caisson en formant des courbes.

9. Porte latérale coulissante selon l'une quelconque des revendications 5 à 8, **caractérisée en ce que** lesdits moyens de liaison mobiles (19, 21) présentent une platine intermédiaire (40) comportant deux portions opposées, ladite platine intermédiaire étant adaptée à être logée à l'intérieur dudit caisson, lesdites portions opposées définissant lesdites extrémités opposées.
